Europäisches Patentamt

European Patent Office

Office européen des brevets

(19)

(11) Veröffentlichungsnummer : **0 064 676**
**B1**

# EUROPÄISCHE PATENTSCHRIFT

(12)

(45) Veröffentlichungstag der Patentschrift :
18.06.86

(51) Int. Cl.⁴ : **H 01 M 10/39**

(21) Anmeldenummer : **82103655.5**

(22) Anmeldetag : **29.04.82**

(54) **Elektrochemische Speicherzelle.**

(30) Priorität : **05.05.81 DE 3117619**

(43) Veröffentlichungstag der Anmeldung :
**17.11.82 Patentblatt 82/46**

(45) Bekanntmachung des Hinweises auf die Patenterteilung : **18.06.86 Patentblatt 86/25**

(84) Benannte Vertragsstaaten :
**BE FR GB IT NL**

(56) Entgegenhaltungen :
**DE-A- 2 401 636**
**DE-A- 2 819 027**

(73) Patentinhaber : **BROWN, BOVERI & CIE Aktiengesellschaft**
**Kallstadter Strasse 1**
**D-6800 Mannheim 31 (DE)**

(72) Erfinder : **Steinleitner, Günther, Dr. Dipl.-Chem.**
**Siegfriedstrasse 30**
**D-6905 Schriesheim (DE)**

(74) Vertreter : **Kempe, Wolfgang, Dr. et al**
**c/o Brown, Boveri & Cie AG Postfach 351**
**D-6800 Mannheim 1 (DE)**

EP 0 064 676 B1

## Beschreibung

Die Erfindung bezieht sich auf eine elektrochemische Speicherzelle gemäß dem Oberbegriff des Patentanspruchs 1.

Solche wiederaufladbaren elektrochemischen Speicherzellen mit Festelektrolyten eignen sich sehr gut zum Aufbau von Akkumulatoren hoher Energie- und Leistungsdichte. Die in den Alkali/Chalkogen-Speicherzellen verwendeten Festelektrolyten, die beispielsweise aus Beta-Aluminiumoxid gefertigt sind, zeichnen sich dadurch aus, daß die Teilleitfähigkeit des beweglichen Ions sehr hoch und die Teilleitfähigkeit der Elektronen um vielfache Zehnerpotenzen kleiner ist. Durch die Verwendung solcher Festelektrolyten für den Aufbau von elektrochemischen Speicherzellen wird erreicht, daß praktisch keine Selbstentladung stattfindet, da die Elektronenleitfähigkeit vernachlässigbar ist und ihre Reaktionssubstanzen auch nicht als neutrale Teilchen durch den Festelektrolyten gelangen können.

Ein spezielles Beispiel für solche wiederaufladbaren elektrochemischen Speicherzellen sind die auf der Basis von Natrium und Schwefel, deren Festelektrolyt aus Beta-Aluminiumoxid gefertigt ist. Ein Vorteil dieser elektrochemischen Speicherzellen besteht darin, daß beim Laden keine elektrochemischen Nebenreaktionen auftreten. Der Grund dafür ist wiederum, daß nur eine Ionensorte durch den Festelektrolyten gelangen kann. Die Stromausbeute einer solchen Natrium/Schwefel-Speicherzelle liegt daher etwa bei 100 Prozent. Bei diesen elektrochemischen Speicherzellen ist das Verhältnis von Energieinhalt zum Gesamtgewicht einer solchen Speicherzelle im Vergleich zum Bleiakkumulator sehr hoch, da die Reaktionsstoffe leicht sind und bei der elektrochemischen Reaktion viel Energie frei wird. Elektrochemische Speicherzellen auf der Basis von Natrium und Schwefel besitzen also gegenüber konventionellen Akkumulatoren, wie den Bleiakkumulatoren erhebliche Vorteile.

Aus der DE-OS 2 819 027 ist eine elektrochemische Speicherzelle bekannt, die nach außenhin durch ein metallisches becherförmiges Gehäuse begrenzt ist. Im Inneren der Speicherzelle ist ein ebenfalls becherförmig ausgebildeter Festelektrolyt angeordnet. Zwischen seinen Außenflächen und den Innenflächen des metallischen Gehäuses befindet sich der Kathodenraum. Im Inneren des Festelektrolyten ist ein Sicherheitsbehälter angeordnet, in dem sich das Natrium befindet. Die Abmessungen des Sicherheitsbehälters sind so gewählt, daß zwischen seinen Außenflächen und den Innenflächen des Festelektrolyten ein Spalt verbleibt, der mit einem als Kapillare wirkenden Material ausgefüllt ist. Der Sicherheitsbehälter weist am unteren Ende eine Öffnung auf, über welche das Natrium in diesen Spalt ausströmen kann. Die Öffnung wird beim Auftreten von Temperaturen, die oberhalb der Arbeitstemperatur der Speicherzelle liegen, durch einen Stopfen verschlossen, so daß kein Natrium mehr in den Spalt zwischen dem Festelektrolyten und dem Sicherheitsbehälter austreten kann. Bei elektrochemischen Speicherzellen der bekannten Bauart kann es beim Anlegen einer zu hohen Spannung an die Speicherzellen zur Zerstörung des Festelektrolyten kommen. Eine Überalterung oder eine mechanische Beschädigung des Festelektrolyten solcher Speicherzellen kann ebenfalls zum Bruch derselben führen. Die Folge davon ist, daß das Natrium und der Schwefel zusammenfließen und direkt miteinander reagieren können. Hierdurch kommt es zu einer starken Erwärmung innerhalb der Speicherzelle, so daß es in ungünstigen Fällen zu einer Zerstörung des metallischen Gehäuses oder der gesamten Speicherzelle durch eine Explosion kommen kann.

Der Erfindung liegt deshalb die Aufgabe zugrunde eine Speicherzelle zu schaffen, bei der das direkte Zusammenfließen von Natrium und Schwefel beim Bruch des Festelektrolyten unterbunden wird.

Diese Aufgabe wird erfindungsgemäß durch die kennzeichnenden Merkmale des Patentanspruchs 1 gelöst.

Bei einer Ausführungsform der Erfindung ist der erste Sicherheitsbereich im Anodenraum und der zweite Sicherheitsbereich im Kathodenraum angeordnet. Bei einem zweiten Ausführungsbeispiel sind beide Sicherheitsbereiche im Anodenraum angeordnet.

Bei der erfindungsgemäßen Speicherzelle kann der Anodenraum in dem vom Festelektrolyten umgebenen Bereich angeordnet werden. Es besteht jedoch auch die Möglichkeit die Speicherzelle als inverse Zelle zu betreiben, und den Ringraum zwischen dem Festelektrolyten und dem Metallgehäuse als Anodenraum zu nutzen.

Bei der erfindungsgemäßen Speicherzelle ist der Festelektrolyt becherförmig ausgebildet. Es besteht die Möglichkeit einen Festelektrolyten zu verwenden, der an seinem geschlossenen Ende eine runde Kuppe aufweist. Ebenso kann ein Festelektrolyt verwendet werden, der durch eine runde Scheibe verschlossen ist. Die beiden den Sicherheitsraum bildenden Sicherheitsbereiche sind so angeordnet, daß sie sich bereichsweise überlappen.

Der im Anodenraum verlaufende erste Bereich des Sicherheitsraumes wird durch ein Stützelement begrenzt, dessen Außenflächen parallel und in definiertem Abstand zu den seitlichen Begrenzungsflächen des Festelektrolyten verlaufen. Die Abmessungen des Stützelementes sind so gewählt, daß sein Abstand zu den seitlichen Begrenzungsflächen des Festelektrolyten möglichst gering ist und maximal 1 bis 2 mm beträgt. Das Stützelement ist über seine gesamte Länge an die Geometrie des Festelektrolyten angepaßt, so daß überall ein gleichmäßiger Abstand zwischen dem Stützelement und dem Festelektrolyten verbleibt. Bei allen Ausführungsformen ist das Stützelement als Rohr ausgebildet. Vorzugsweise wird es aus Aluminium, einer Aluminiumlegierung oder Stahl hergestellt.

Bei einer Ausführungsform der erfindungsgemäßen Speicherzelle ist der zweite Sicherheitsbereich des direkt an den Festelektrolyten anschließenden Sicherheitsraumes innerhalb des Kathodenraumes angeordnet und wird durch eine Schalung begrenzt, die in definiertem Abstand zum geschlossenen Ende des Festelektrolyten verläuft. Die Schalung ist an die Geometrie des Festelektrolyten, insbesondere an die Geometrie seines geschlossenen Endes angepaßt. Weist der Festelektrolyt eine runde Kuppe auf, so ist die Schalung vorzugsweise als Kappe ausgebildet. In jedem Fall sind die Abmessungen der Schalung so gewähl, daß sie das geschlossene Ende des Festelektrolyten vollständig umgibt, derart, daß eine Überlappung der beiden Sicherreitsbereiche erfolgt. Der Abstand der Schalung vom geschlossenen Ende des Festelektrolyten beträgt maximal 1 bis 2 mm.

Der Sicherheitsbereich zwischen der Schalung und dem Festelektrolyten ist mit einem inertem Material ausgefüllt. Bei allen Ausführungsformen werden die zur Begrenzung des zweiten Sicherheitsbereiches verwendeten Schalungen aus Aluminium, einer Aluminiumlegierung, Edelstahl, Graphit, Keramik oder Molybdän gefertigt.

Die den zweiten Sicherheitsbereich begrenzende Schalung kann selbstverständlich auch innerhalb des Anodenraumes angeordnet werden. Dies bedeutet, daß beide den Sicherheitsraum um den Festelektrolyten bildenden Sicherheitsbereiche im Anodenraum angeordnet sind.

Bei einer anderen Ausführungsform der Erfindung wird die den zweiten Sicherheitsbereich begrenzende Schalung durch den Boden des metallischen Gehäuses der Speicherzelle nicht gebildet. Der Boden des Metallgehäuses weist insbesondere im Bereich des Festelektrolyten einen wannen-bzw. u-förmigen Querschnitt auf.

Bei der erfindungsgemäßen Speicherzelle wird beim Bruch des Festelektrolyten aufgrund der obenbeschriebenen Maßnahmen ein direktes Zusammenfließen von Natrium und Schwefel weitgehende verhindert, zumindest aber zeitlich stark verlangsamt. Ein Festelektrolytbruch bewirkt bei dieser Speicherzelle keine Zerstörung des Zellmantels. Durch die Anordnung des Sicherheitsraumes, der direkt an den Festelektrolyten angrenzt wird die Leistungsabgabe der Speicherzelle nicht gemindert, vielmehr ist sie ebenso groß wie bei den bisher bekannten Speicherzellen. Die um das geschlossene Ende des Festelektrolyten angeordnete Schalung bewirkt zwar eine Begrenzung des Durchtritts von Natriumionen in diesem Bereich, dies hat jedoch den Vorteil, daß an dieser Stelle eine Alterung des Festelektrolyten vermieden wird, so daß eine Zerstörung desselben hier fast vollständig ausgeschlossen ist.

Die Erfindung wird nachfolgend anhand von Zeichnungen erläutert.

Es zeigen :
Figur 1   eine Speicherzelle im Vertikalschnitt,
Figur 2   eine Variante der in Fig. 1 gezeigten Speicherzelle,
Figur 3   eine inverse Speicherzelle,
Figur 4   eine weitere Speicherzelle,
Figur 5   eine Speicherzelle, bei der die Schalung durch den Boden des Gehäuses gebildet wird.

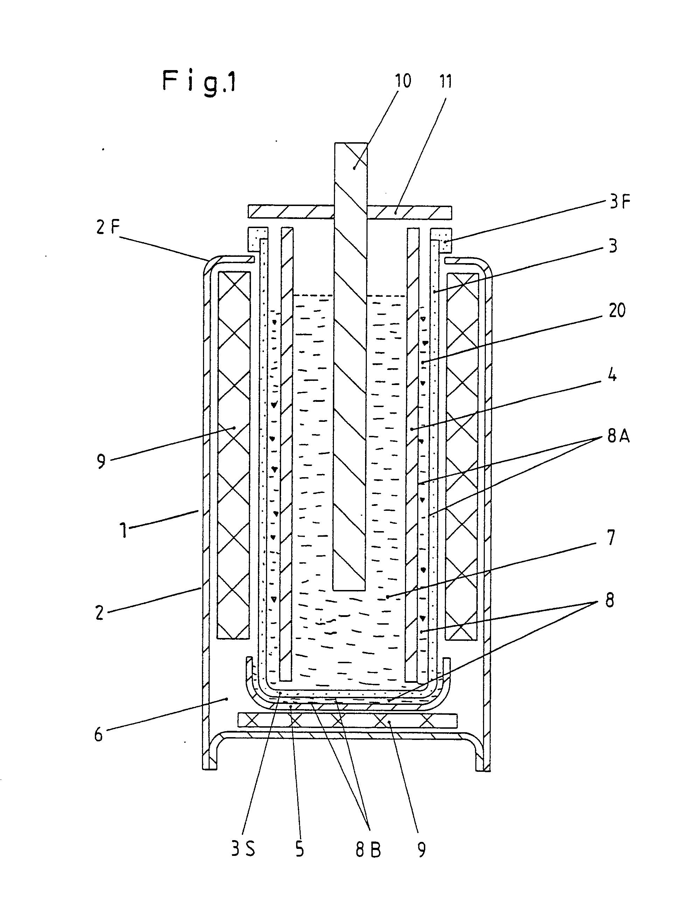

Die in Fig. 1 dargestellte elektrochemische Speicherzelle 1 wird im wesentlichen aus einem becherförmigen Gehäuse 2, das aus Metall gefertigt ist und einem Festelektrolyten 3 gebildet. Im Inneren des metallischen Gehäuses 2 ist der ebenfalls becherförmig ausgebildete Festelektrolyt 3 angeordnet. Die hier gezeigte Ausführungsform des Festelektrolyten 3 ist aus Beta-Aluminiumoxid hergestellt. Die Abmessungen des Festelektrolyten 3 sind so gewählt, daß zwischen seinen Außenflächen und den Innenflächen des metallischen Gehäuses 2 ein zusammenhängender Zwischenraum 6 gebildet wird, der als Kathodenraum dient. Das metallische Gehäuse 2 ist am offenen Ende mit einem nach innen weisenden Flansch 2F versehen. Der Festelektrolyt 3 weist einen nach außen gerichteten Flansch 3F auf. Dieser ist aus Alpha-Aluminiumoxid gefertigt und über ein Glaslot (hier nicht dargestellt) mit dem Festelektrolyten 3 kraftschlüssig verbunden. Der Flansch 3F ist auf den Flansch 2F des metallischen Gehäuses 2 aufgesetzt und abgedichtet. Wie bereits oben erwähnt ist der Festelektrolyt 3 becherförmig ausgebildet. Den Verschluß am zweiten Ende des Festelektrolyten bildet eine runde Scheibe 3S, die in herkömmlicher Weise mit dem Festelektrolyten verbunden und vorzugsweise aus Beta-Aluminiumoxid hergestellt ist. Im Inneren des Festelektrolyten 3 ist das als Rohr ausgebildete Stützelement 4 angeordnet. Das Stützelement ist geringfügig kürzer ausgebildet als der Festelektrolyt 3. Sein Durchmesser ist so gewählt, daß zwischen seinen Außenflächen und den Innenflächen des Festelektrolyten 3 ein den Sicherheitsbereich 8A des Sicherheitsraumes 8 bildender Zwischenraum verbleibt. Das Stützelement ist bei der hier beschriebenen Ausführungsform aus Aluminium, einer Aluminiumlegierung oder Stahl gefertigt. Das Gleiche gilt für alle übrigen in den weiteren Ausführungsbeispielen beschriebenen Stützelemente. Die Länge des Stützelementes ist in jedem Fall so bemessen, daß es sich vom offenen Ende des Festelektrolyten bis zum geschlossenen Ende des Festelektrolyten erstreckt. Das geschlossene Ende des Festelektrolyten wird durch das Stützelement 4 nicht überdeckt. Der durch das Stützelement 4 begrenzte Sicherheitsbereich 8A ist mit einem kapillaraktiven Material 20 ausgefüllt. Der Innenbereich des Stützelementes 4 enthält ausschließlich Natrium. Das Stützelement 4 ist so innerhalb des Festelektrolyten 3 angeordnet, daß zwischen dessen Boden 3S und der unteren Begrenzung des Stützelementes 4 ein schmaler Spalt verbleibt. Dadurch wird erreicht, daß der Innenraum des Stützelementes 4 mit dem kapillaraktiven Material innerhalb des Sicherheitsbereiches 8A ständig in Verbindung steht. Das kapillaraktive Material bewirkt einen kontinuierlichen Transport des Natriums an die inneren Begrenzungsflächen des Festelektrolyten. Damit wird eine vollständige Entladung der aufgeladenen Speicherzelle sichergestellt. Durch das Stützelement 4 wird zusätzlich erreicht, daß das im Sicherheitsbereich 8A angeordnete kapillaraktive Material 20 überall gleichmäßig gegen die seitlichen Begrenzugsflächen des Festelektrolyten 3 gepreßt wird.

Wie bereits oben erwähnt, ist zwischen dem Festelektrolyten 3 und dem metallischen Gehäuse 2 der Kathodenraum 6 vorgesehen. Zum Schutz des geschlossenen Festelektrolytendes 3S ist innerhalb des Kathodenraumes 6 ein zweiter Sicherheitsbereich 8B vorgesehen. Dieser ist um das geschlossene Ende des Festelektrolyten 3 angeordnet. Begrenzt wird dieser zweite Sicherheitsbereich 8B durch die Schalung 5. Der zweite Sicherheitsbereich 8B bildet zusammen mit dem im Anodenraum liegenden Sicherheitsbereich 8A einen den Festelektrolyten umgebenden Sicherheitsraum 8. Die Schalung 5 ist im wesentlichen an die Geometrie des geschlossenen Endes des Festelektrolyten 3 angepaßt. Die seitlichen Begrenzungsflächen der Schalung 5 sind so weit nach oben geführt, daß sie über das untere Ende des im Anodenraum angeordneten Stützelementes 4 überstehen. Die Schalung 5 ist so angeordnet, daß zwischen ihr und dem geschlossenen Ende 3S des Festelektrolyten 3 der den Sicherheitsbereich 8B bildende Freiraum verbleibt. Der Abstand zwischen der Schalung 5 und dem Festelektrolyten beträgt nur 1 bis 2 mm. Die Schalung 5 ist bei dem hier beschriebenen Ausführungsbeispiel aus Aluminium, einer Aluminiumlegierung, Edelstahl, Graphit, Keramik oder Molybdän gefertigt. Das Gleiche gilt für alle in den nachfolgenden Ausführungsbeispielen beschriebenen Schalungen 5. Vorzugsweise wird zwischen der Schalung 5 und dem Boden des metallischen Gehäuses 2 ein Graphitfilz 9 eingeschoben. Durch geeignete Wahl der Filzdicke, kann der Abstand zwischen der Schalung 5 und dem Festelektrolyten 3 einreguliert werden. Die übrigen Bereiche des Kathodenraumes 6 sind ebenfalls mit einem Graphitfilz 9 ausgefüllt, der ebenso wie der unter der Schalung 5 angordnete Graphitfilz 9 mit Schwefel getränkt ist.

Bei der hier gezeigten Ausführungsform der Speicherzelle dient das metallische Gehäuse 2 als kathodischer Stromabnehmer. In das Innnere des Festelektrolyten 3, das als Anodenraum 7 dient, ragt ein anodischer Stromabnehmer 10 hinein. Dieser ist durch die Verschlußplatte 11 der Speicherzelle hindurchgesteckt und überragt selbige um einige mm. Als anodischer Stromabnehmer 10 kommt vorzugsweise ein Metallstab in Frage. Der Sicherheitsbereich 8B ist mit einem inerten Material ausgefüllt.

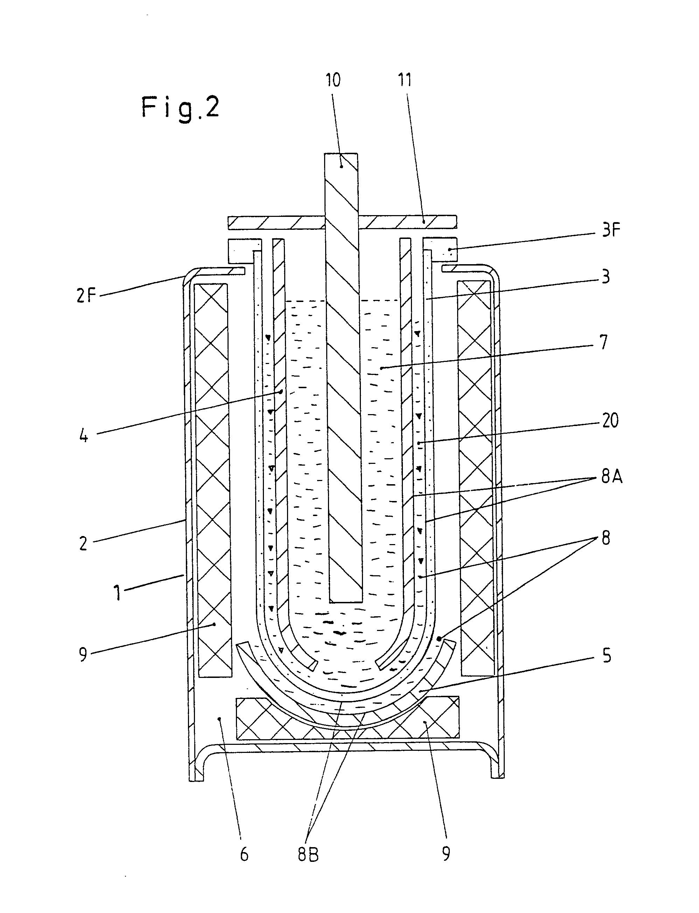

In Fig. 2 ist eine Variante der in Fig. 1 dargestellten Speicherzelle zu sehen. Sie ist im wesentlichen Baugleich mit der in Fig. 1 dargestellten Speicherzelle 1, lediglich ist hierbei der becherförmig ausgebildete Festelektrolyt 3 durch eine runde Kuppe verschlossen. Im Inneren des Festelektrolyten 3 ist wiederum ein Stützelement 4 angeordnet, das auch bei diesem Ausführungsbeispiel als Rohr ausgebildet ist. Seine Abmessungen entsprechen den Abmessungen des in Fig. 1 dargestellten Stützelementes 4. Über seine gesamte Länge ist es an die Geometrie des Festelektrolyten 3 angepaßt. Insbesondere sind die seitlichen Begrenzungsflächen des als Rohr ausgebildeten Stützelementes 4 am unteren Ende geringfügig nach innen gebogen, so daß sie der Kontur der runden Kuppe folgen. Zwischen dem Stützelemnt 4 und dem Festelektrolyten 3 befindet sich wiederum der erste Sicherheitsbereich 8A, der auch hierbei mit einem kapillaraktiven Material 20 ausgefüllt ist. Der Innenbereich des Stützelementes 4 enthält Natrium. Durch einen Spalt zwischen dem unteren Ende des Stützelementes 4 und dem Festelektrolyten 3 kann das Natrium mit Hilfe des kapillaraktiven Materials überall an die Begrenzungsflächen des Festelektrolyten herangeführt werden. Um einen besonders guten Kontakt zwischen dem Innenbereich des Stützelementes 4 und dem kapillaraktiven Material 20 innerhalb des ersten Sicherheitsbereiches 8A zu erhalten, kann in den Spalt zwischen dem unteren Ende des Stützelementes 4 und dem Festelektrolyten Stahlwolle eingeschoben werden.

Der Kathodenraum 6 liegt bei diesem Ausführungsbeispiel ebenfalls zwischen dem Festelektrolyten 3 und dem metallischen Gehäuse 2. Zur Bildung des zweiten Sicherheitsbereiches 8B ist auch hierbei eine Schalung 5 in vorgebbarem Abstand von dem geschlossenen Ende des Festelektrolyten 3 angeordnet. Der zwischen dem Festelektrolyten 3 und der Schalung 5 liegende Raum, welcher den zweiten Sicherheitsbereich 8B bildet, ist mit einem inertem Material ausgefüllt. Die Schalung 5 ist hierbei vorzugsweise als Kappe ausgebildet und umhüllt das untere Ende des Festelektrolyten 3 vollständig. Die Kappe 5 ist soweit nach oben gezogen, daß sie über das untere Ende des Stützelementes 4, das im Anodenraum 7 angeordnet ist, übersteht. Um den gewünschten Abstand zwischen der Schalung 5 und dem Festelektrolyten 3 zu erhalten, wird zwischen die Schalung 5 und dem Boden des metallischen Gehäuses 2 wiederum ein Graphitfilz 9 mit einer definierten Dicke eingeschoben. Der übrige Bereich des Kathodenraumes 6 ist ebenfalls mit einem Graphitfilz 9 ausgefüllt, der mit Schwefel getränkt ist. Das metallische Gehäuse 2 dient als kathodischer Stromabnehmer. In den Anodenraum 7 ragt ein als anodischer Stromabnehmer dienender Metallstab 10 hinein, der die Deckplatte 11 der Speicherzelle durchsetzt und einige mm über diese übersteht.

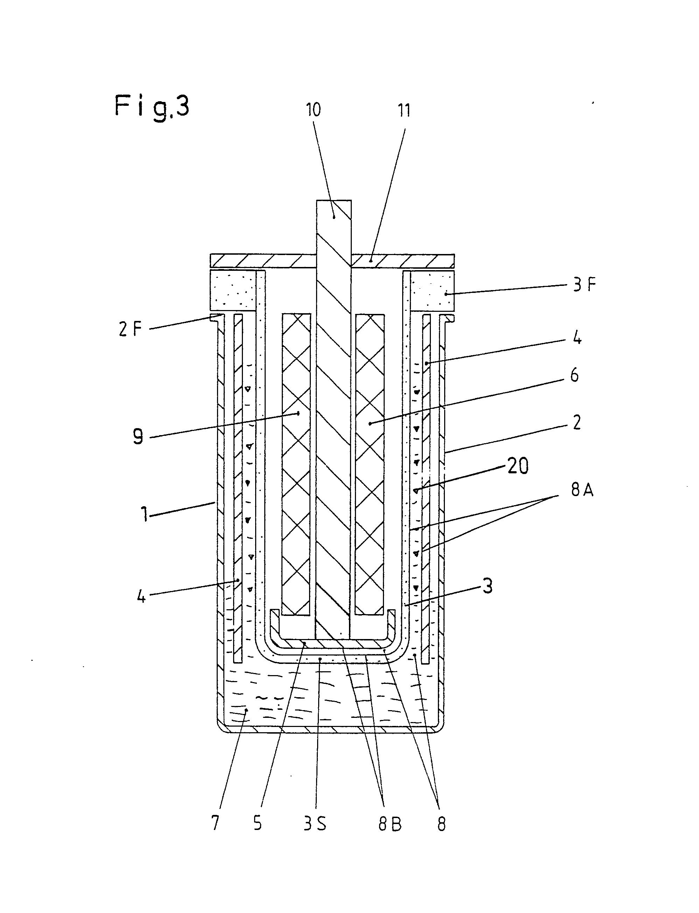

Fig. 3 zeigt eine inverse Speicherzelle 1, die ebenfalls einen Sicherheitsraum 8 um den Festelektrolyten 3 aufweist. Diese Speicherzelle ist im wesentlichen so aufgebaut, wie die in Fig. 1 dargestellte und in der dazugehörigen Beschreibung erläuterte Speicherzelle 1. Der wesentliche Unterschied hierbei besteht jedoch darin, daß der Kathodenraum 6 innerhalb des Festelektrolyten 3 angeordnet ist, während sich der Anodenraum 7 zwischen dem metallischen Gehäuse 2 und dem Festelektrolyten 3 befindet. Der erste Sicherheitsbereich 8A wird auch hierbei durch ein Stützelement 7 begrenzt. Dieses ist als Rohr ausgebildet und um den Festelektrolyten 3 herum angeordnet. Der Durchmesser des Stützelementes 4 ist so gewählt, daß zwischen ihm und dem Festelektrolyten ein freier Raum verbleibt, der den Sicherheitsbereich 8A bildet. Die Länge des Stützelementes 4 ist so gewählt, daß es sich bis zum offenen oberen Ende des Festelektrolyten erstreckt und einige mm über das untere Ende des Festelektrolyten 3 übersteht. Der erste Sicherheitsbereich 8A ist auch hierbei mit einem kapillaraktiven Material 20 ausgefüllt. Der gesamte Bereich des Anodenraumes 7 enthält Natrium. Durch das kapillaraktive Material 20 wird der Transport des Natrium zu den Außenflächen des Festelektrolyten 3 begünstigt. Durch das Stützelement wird ein optimaler Kontakt zwischen dem kapillaraktiven Material 20 und dem Festelektrolyten 3 erzielt. Das metallische Gehäuse 2 dient hierbei als anodischer Stromabnehmer. Im Inneren des Festelektrolyten 3 befindet sich, wie bereits erwähnt der Kathodenraum 6. Der Festelektrolyt 3 ist hierbei becherförmig ausgebildet und durch eine runde Scheibe 3S verschlossen. Innerhalb des Kathodenraumes 6 ist in einem geringen Abstand von der Scheibe 3S eine Schalung 5 angeordnet. Der zwischen der Scheibe 3S und der Schalung 5 liegende Raum bildet den zweiten Sicherheitsbereich 8B. Der zweite Sicherheitsbereich kann auch hierbei mit einem inertem Material ausgefüllt werden. Die Schalung 5 überdeckt die Scheibe 3S vollständig und ist parallel zu den seitlichen Begrenzungsflächen des Festelektrolyten 3 einige mm nach oben gezogen. Um den gewünschten Abstand der Schalung 5 von der Scheibe 3S zu erhalten, ist die Schalung 5 mit dem in den Festelektrolyten 3 hineinragenden Stromabnehmer 10 verbunden. Durch entsprechende Längenwahl des Stromabnehmers 10 läßt sich damit der Abstand der Schalung 5 vom unteren Ende des Festelektrolyten 3 bestimmen. Die Speicherzelle ist durch eine Deckplatte 11 verschlossen. Der Stromabnehmer 10 durchsetzt diese Deckplatte 11 und überragt diese um einige mm.

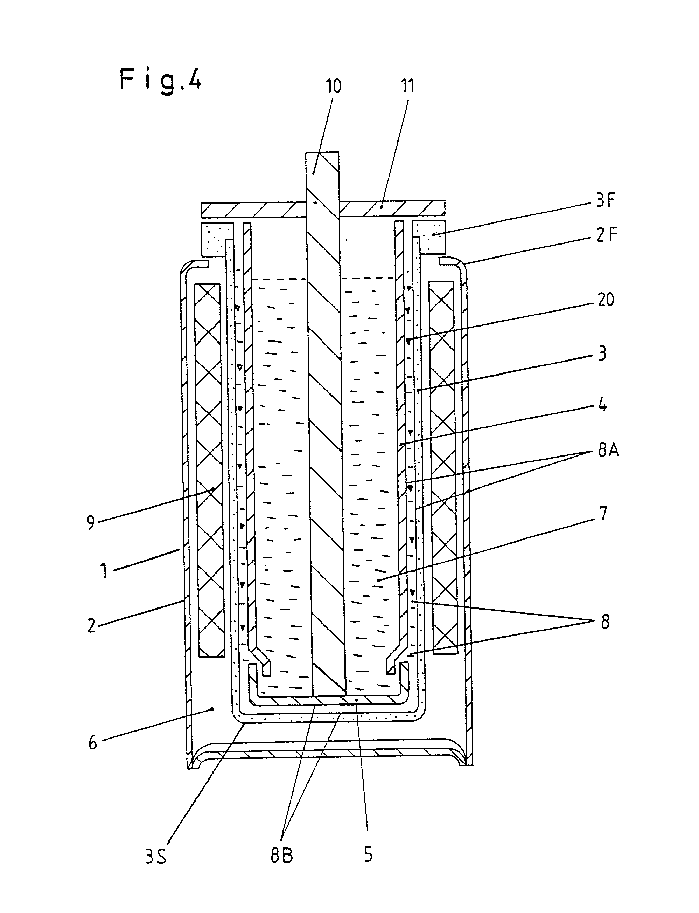

Fig. 4 zeigt eine Speicherzelle bei der beide Sicherheitsbereiche 8A und 8B innerhalb des Anodenraumes angeordnet sind. Die Speicherzelle ist im wesentlichen Baugleich mit der in Fig. 1 dargestellten, und in der dazugehörigen Beschreibung erläuterten Speicherzelle 1. Der Unterschied besteht lediglich darin, daß die Schalung 5 bei der hier gezeigten Speicherzelle ebenfalls innerhalb des Festelektrolyten angeordnet ist. Sie ist im wesentlichen so ausgebildet wie die in Fig. 3 dargestellte Schalung 5, die ebenfalls innerhalb des Festelektrolyten 3 angeordnet ist. Um den gewünschten Abstand zwischen der Schalung 5 und dem geschlossenen Ende des Festelektrolyten zu erreichen, ist auch bei diesem Ausführungsbeispiel die Schalung 5 mit dem in den Festelektrolyten 3 hineinragenden Stromabnehmer 10 verbunden. Durch geeignete Längenwahl des Stromabnehmers 10 läßt sich jeder gewünschte Abstand der Schalung 5 vom geschlossenen Ende des Festelektrolyten 3 erreichen. Der Abstand sollte jedoch auch hierbei nicht mehr als 1 bis 2 mm betragen. Der zwischen der Schalung 5 und dem geschlossenen Ende des Festelektrolyten 3 gebildete Bereich dient als zweiter Sicherheitsbereich 8B, der zusätzlich mit einem inerten Material ausgefüllt werden kann. Der erste Sicherheitsbereich 8A wird auch hierbei durch das Stützelement 4 gebildet, das ebenfalls innerhalb des Festelektrolyten 3 angeordnet ist. Der Durchmesser des Stützelementes 4 ist so gewählt, daß zwischen seinen Außenflächen und den Innenflächen des Festelektrolyten 3 ein Freiraum verbleibt, der den Sicherheitsbereich 8A bildet. Dieser ist auch hierbei mit einem kapillaraktiven Material 20 ausgefüllt. Das Stützelement ist hierbei geringfügig kürzer ausgebildet als bei den übrigen Ausführungsbeispielen. Zusätzlich sind seine Begrenzungsflächen am unteren Ende geringfügig nach innen gebogen. Durch diese Maßnahme wird erreicht, daß zwischen dem Stützelement 4 und der Schalung 5 ein Spalt verbleibt. Das innere des Stützelementes 4 ist mit Natrium ausgefüllt. Dieses kann durch den zwischen dem Stützelement 4 und der Schalung 5 verbleibenden Spalt in den Sicherheitsbereich 8A gelangen. Durch das kapillaraktive Material 20 wird das Natrium den Begrenzungsflächen des Festelektrolyten 3 zugeführt, sodaß diese ständig mit Natrium benetzt sind.

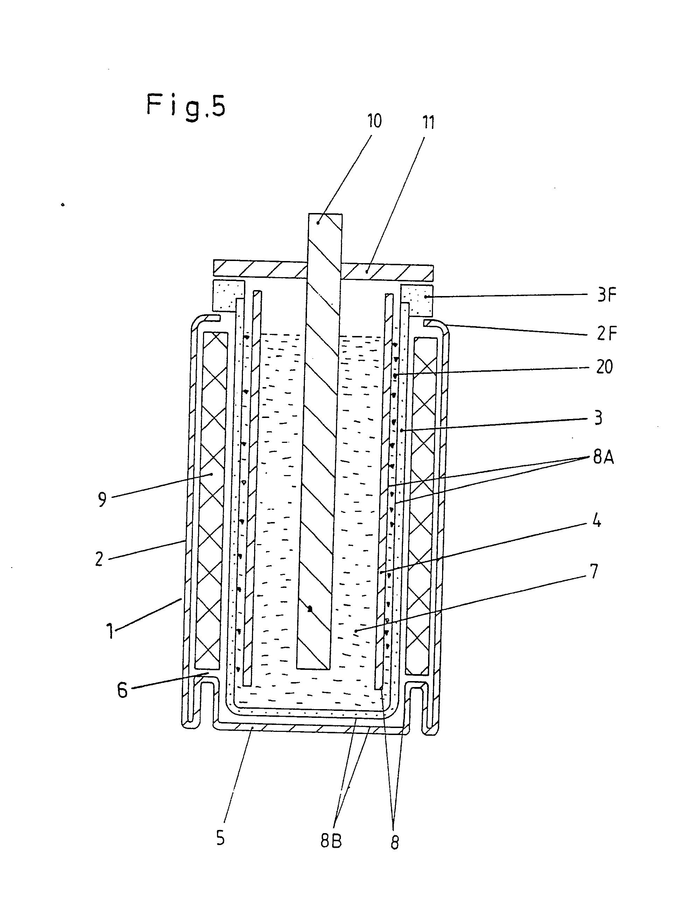

Die in Fig. 5 dargestellte Speicherzelle 1 ist bis auf das metallische Gehäuse 2 und die Schalung 5, die den Sicherheitsbereich 8A im Kathodenraum begrenzt ebenso ausgebildet wie die in Fig. 1 dargestellte und in der dazugehörigen Beschreibung erläuterte Speicherzelle. Bei dem hier gezeigten Ausführungsbeispiel wird auf eine extra Schalung 5 zur Begrenzung des Sicherheitsbereiches 8B im Kathodenraum 6 verzichtet. Vielmehr wird die Schalung 5 durch den Boden des metallischen Gehäuses 2 mitgebildet. Zu diesem Zweck ist der Boden des metallischen Gehäuses 2 an die Geometrie des geschlossenen Festelektrolytendes angepaßt. Insbesondere weist der Boden des Gehäuses 2 im Bereich des Festelektrolyten 3 einen u-förmigen Querschnitt auf. Beidseitig der U-Form ist der Boden zunächst waagrecht geführt. Anschließend ist er nach unten umgebogen und bis zur Unterkante des matallischen Gehäuses 2 geführt. Die Höhe der U-Form ist so gewählt, daß die durch den Boden gebildete Schalung 5 einige mm nach oben geführt ist. Dadurch wird erreicht, daß die Unterkanten des im Festelektrolyten 3 angeordneten Stützelementes 4 von ihr geringfügig überragt werden. Der Abstand zwischen dem Boden des Metallgehäuses 2 beträgt im Bereich des Festelektrolyten maximal 1 bis 2 mm. Zwischen dem Festelektrolyten und der Schalung 5, insbesondere dem Boden des Metallgehäuses kann auch bei diesem Ausführungsbeispiel ein inertes Material angeordnet werden.

**Patentansprüche**

1. Elektrochemische Speicherzelle oder -batterie (1) auf der Basis von Natrium und Chalkogen mit mindestens einem für die Aufnahme des Anolyten bestimmten Anodenraum (7) und einem für die Aufnahme des Katholyten bestimmten Kathodenraum (6), welche durch einen alkaliionenleitenden becherförmigen Festelektrolyten (3) voneinander getrennt und mindestens bereichsweise von einem metallischen Gehäuse (2) begrenzt sind, sowie einem an den Festelektrolyten (3) angrenzenden Sicherheitsraum (8), dadurch gekennzeichnet, daß der Sicherheitsraum (8) in wenigstens zwei Sicherheitsbereiche (8A, 8B) unterteilt ist, die teilweise überlappend angeordnet sind, daß der erste Sicherheitsbereich (8A) durch ein Stützelement (4) begrenzt ist, dessen Außenflächen parallel und im Abstand zu den seitlichen Begrenzungsflächen des Festelektrolyten (3) verlaufen und daß der zweite Sicherheitsbereich (8B) durch eine im Abstand zum geschlossenen Ende des Festelektrolyten (3) verlaufende Schalung (5) begrenzt ist.

2. Elektrochemische Speicherzelle nach Anspruch 1, dadurch gekennzeichnet, daß ein erster Sicherheitsbereich (8A) im Anodenraum (7) und wenigstens ein zweiter Sicherheitsbereich (8B) im Kathodenraum (6) angeordnet ist.

3. Elektrochemische Speicherzelle nach Anspruch 1, dadurch gekennzeichnet, daß beide Sicherheitsbereiche (8A und 8B) im Anodenraum (7) angeordnet sind.

4. Elektrochemische Speicherzelle nach einem der Ansprüche 1 bis 3, dadurch gekennzeichnet, daß der Anodenraum (7) in dem vom Festelektrolyten umgebenen Bereich angeordnet ist.

5. Elektrochemische Speicherzelle nach Anspruch 1 bis 3, dadurch gekennzeichnet, daß der Anodenraum (7) zwischen dem Festelektrolyten (3) und dem metallischen Gehäuse (2) angeordnet ist.

6. Elektrochemische Speicherzelle nach Anspruch 1 bis 5, dadurch gekennzeichnet, daß der Festelektrolyt (3) an seinem geschlossenen Ende eine runde Kuppe aufweist.

7. Elektrochemische Speicherzelle nach Anspruch 1 bis 6, dadurch gekennzeichnet, daß der Festelektrolyt (3) an seinem geschlossenen Ende durch runde Scheibe (3S) verschlossen ist.

8. Elektrochemische Speicherzelle nach Anspruch 1 bis 7, dadurch gekennzeichnet, daß der erste Sicherheitsbereich (8A) im Anodenraum parallel zu den seitlichen Begrenzungsflächen des Festelektrolyten (3) angeordnet ist.

9. Elektrochemische Speicherzelle nach einem der Ansprüche 1 bis 8, dadurch gekennzeichnet, daß der Abstand zwischen dem Stützelement (4) und den seitlichen Begrenzungsflächen des Festelektrolyten 1 bis 2 mm beträgt.

10. Elektrochemische Speicherzelle nach einem der Ansprüche 1 bis 9, dadurch gekennzeichnet, daß der Raum zwischen dem Festelektrolyten (3) und dem Stützelement (4) mit einem kapillaraktiven Material (20) ausgefüllt ist.

11. Elektrochemische Speicherzelle nach einem der Ansprüche 1 bis 10, dadurch gekennzeichnet, daß das den ersten Sicherheitsbereich (8A) begrenzende Stützelement (4) an die Geometrie des Festelektrolyten (3) angepaßt ist.

12. Elektrochemische Speicherzelle nach einem der Ansprüche 1 bis 11, dadurch gekennzeichnet, daß das Stützelement (4) als Rohr ausgebildet ist.

13. Elektrochemische Speicherzelle nach einem der Ansprüche 1 bis 12, dadurch gekennzeichnet, daß die Schalung (5) an die Geometrie des geschlossenen Endes des Festelektrolyten (3) angepaßt ist.

14. Elektrochemische Speicherzelle nach Anspruch 1, dadurch gekennzeichnet, daß die Schalung (5) im Kathodenraum (6) angeordnet ist.

15. Elektrochemische Speicherzelle nach einem der Ansprüche 1 bis 14, dadurch gekennzeichnet, daß die Schalung (5) als Kappe ausgebildet ist.

16. Elektrochemische Speicherzelle nach einem der Ansprüche 1 bis 15, dadurch gekennzeichnet, daß die den zweiten Sicherheitsbereich (8B) begrenzende Schalung (5) nur einen Abstand von 1 bis 2 mm von geschlossenen Ende des Festelektrolyten (3) hat.

17. Elektrochemische Speicherzelle nach einem der Ansprüche 1 bis 16, dadurch gekennzeichnet, daß zwischen der Schalung (5) und dem geschlossenen Ende des Festelektrolyten (3) ein inertes Material angeordnet ist.

18. Elektrochemische Speicherzelle nach einem der Ansprüche 1 bis 17, dadurch gekennzeichnet, daß das Stützelement (4) aus Aluminium, einer Aluminiumlegierung oder Stahl gefertigt ist.

19. Elektrochemische Speicherzelle nach einem der Ansprüche 1 bis 18, dadurch gekennzeichnet, daß die Schalung (5) aus Aluminium, einer Aluminiumlegierung, Edelstahl, Graphit, Keramik oder Molybdän gefertigt ist.

**Claims**

1. Electro-chemical storage cell or battery (1) based on sodium and chalcogen and comprising at least an anode space (7) intended for accommodating the anolyte and a cathode space (6) intended for accommodating the catholyte, which spaces are separated from each other by an alkali-ion-conducting cup-shaped solid electrolyte (3) and are confined by a metallic housing (2) at least over an area, and comprising a safety space (8) adjoining the solid electrolyte (3), characterized in that the safety space (8) is subdivided into at least two safety areas (8A, 8B) which are arranged to be partially overlapping, that the first safety area (8A) is confined by a support element (4) the outer surfaces of which extend parallel with and at a distance from the lateral boundary areas of the solid electrolyte (3) and that the second safety area (8B) is confined by a shell (5) extending at a distance from the closed end of the solid electrolyte (3).

2. Electro-chemical storage cell according to Claim 1, characterized in that a first safety area (8A) is arranged in the anode space (7) and at least one second safety area (8B) is arranged in the cathode space (6).

3. Electro-chemical storage cell according to Claim 1, characterized in that both safety areas (8A and 8B) are arranged in the anode space (7).

4. Electro-chemical storage cell according to one of Claims 1 to 3, characterized in that the anode space (7) is arranged in the area surrounded by the solid electrolyte.

5. Electro-chemical storage cell according to Claims 1 to 3, characterized in that the anode space (7) is arranged between the solid electrolyte (3) and the metallic housing (2).

6. Electro-chemical storage cell according to Claims 1 to 5, characterized in that the solid electrolyte (3) has a round dome at its closed end.

7. Electro-chemical storage cell according to Claims 1 to 6, characterized in that the solid electrolyte (3) is closed by a round disc (3S) at its closed end.

8. Electro-chemical storage cell according to Claims 1 to 7, characterized in that the first safety area (8A) is arranged in the anode space parallel to the lateral boundary areas of the solid electrolyte (3).

9. Electro-chemical storage cell according to one of Claims 1 to 8, characterized in that the distance between the support element (4) and the lateral boundary areas of the solid electrolyte is 1 to 2 mm.

10. Electro-chemical storage cell according to one of Claims 1 to 9, characterized in that the space between the solid electrolyte (3) and the support element (4) is filled with a capillary-active material (20).

11. Electro-chemical storage cell according to one of Claims 1 to 10, characterized in that the support element (4) delimiting the first safety area (8A) is matched to the geometry of the solid electrolyte (3).

12. Electro-chemical storage cell according to one of Claims 1 to 11, characterized in that the support element (4) is constructed as a tube.

13. Electro-chemical storage cell according to one of Claims 1 to 12, characterized in that the shell (5) is matched to the geometry of the closed end of the solid electrolyte (3).

14. Electro-chemical storage cell according to Claim 1, characterized in that the shell (5) is arranged in the cathode space (6).

15. Electro-chemical storage cell according to one of Claims 1 to 14, characterized in that the shell (5) is constructed as a cap.

16. Electro-chemical storage cell according to one of Claims 1 to 15, characterized in that the shell (5) delimiting the second safety area (8B) only has a distance of 1 to 2 mm from the closed end of the solid electrolyte (3).

17. Electro-chemical storage cell according to one of Claims 1 to 16, characterized in that an inert material is arranged between the shell (5) and the closed end of the solid electrolyte (3).

18. Electro-chemical storage cell according to one of Claims 1 to 17, characterized in that the support element (4) is manufactured from aluminium, an aluminium alloy or steel.

19. Electro-chemical storage cell according to one of Claims 1 to 18, characterized in that the shell (5) is manufactured from aluminium, an aluminium alloy stainless steel, graphite, ceramics or molybdenum.

**Revendications**

1. Accumulateur ou élément (1) d'accumulateur électrochimique utilisant le couple sodium-chalcogène, avec au moins un compartiment anodique (7) destiné à recevoir l'anolyte et un compartiment cathodique (6) destiné à recevoir le catholyte, qui sont séparés l'un de l'autre par un électrolyte solide (3) en forme de godet conduisant les ions alcalins et qui sont délimités au moins partiellement par un boîtier métallique (2), ainsi que par un compartiment de sécurité (8) adjacent à l'ectrolyte solide (3), caractérisé par le fait que le compartiment de sécurité (8) est subdivisé en au moins deux zones de sécurité (8A, 8B) qui sont disposées en chevauchement partiel, que la première zone de sécurité (8A) est délimitée par un élément de support (4) dont les faces extérieures s'étendent parallèlement et à distance des faces latérales de délimitation de l'électrolyte solide (3), et que la deuxième zone de sécurité (8B) est délimitée par une coque (5) s'étendant à distance de l'extrémité fermée de l'électrolyte solide (3).

2. Elément d'accumulateur électrochimique selon la revendication 1, caractérisé par le fait qu'une première zone de sécurité (8A) est disposée dans le compartiment anodique (7), et au moins une deuxième zone de sécurité (8B) dans le compartiment cathodique (6).

3. Elément d'accumulateur électrochimique selon la revendication 1, caractérisé par le fait que les deux zones de sécurité (8A et 8B) sont disposées dans le compartiment anodique (7).

4. Elément d'accumulateur électrochimique selon une des revendications 1 à 3, caractérisé par le fait que le compartiment anodique (7) est disposé dans la zone entourée par l'électrolyte solide.

5. Elément d'accumulateur électrochimique selon une des revendications 1 à 3, caractérisé par le fait que le compartiment anodique (7) est disposé entre l'électrolyte solide (3) et le boîtier métallique (2).

6. Elément d'accumulateur électrochimique selon une des revendications 1 à 5, caractérisé par le fait que l'électrolyte solide (3) présente à son extrémité fermée une calotte ronde.

7. Elément d'accumulateur électrochimique selon une des revendications 1 à 6, caractérisé par le fait que l'électrolyte solide (3) est obturée à son extrémité fermée par un disque rond (3S).

8. Elément d'accumulateur électrochimique selon une des revendications 1 à 7, caractérisé par le fait que la première zone de sécurité (8A) est disposée dans le compartiment anodique parallèlement aux faces latérales de délimitation de l'électrolyte solide (3).

9. Elément d'accumulateur électrochimique selon une des revendications 1 à 8, caractérisé par le fait que la distance entre l'élément de support (4) et les faces latérales de délimitation de l'électrolyte solide est de 1 à 2 mm.

10. Elément d'accumulateur électrochimique selon une des revendications 1 à 9, caractérisé par le fait que l'espace compris entre l'électrolyte solide (3) et l'élément de support (4) est rempli d'un matériau (20) à activité capillaire.

11. Elément d'accumulateur électrochimique selon une des revendications 1 à 10, caractérisé par le fait que l'élément de support (4) qui délimite la première zone de sécurité (8A) est adapté à la géométrie de l'électrolyte solide (3).

12. Elément d'accumulateur électrochimique selon une des revendications 1 à 11, caractérisé par le fait que l'élément de support (4) est réalisé sous forme de tube.

13. Elément d'accumulateur électrochimique selon une des revendications 1 à 12, caractérisé par le fait que la coque (5) est adaptée à la géométrie de l'extrémité fermée de l'electrolyte solide (3).

14. Elément d'accumulateur électrochimique selon la revendication 1, caractérisé par le fait que la coque (5) est disposée dans le compartiment cathodique (6).

15. Elément d'accumulateur électrochimique selon une des revendications 1 à 14, caractérisé par le fait que la coque (5) est réalisée sous fome de capuchon.

16. Elément d'accumulateur électrochimique selon une des revendications 1 à 15, caractérisé par le fait que la coque (5) délimitant la deuxième zone de sécurité (8B) ne se trouve qu'à une distance de 1 à 2 mm de l'extrémité fermée de l'électrolyte solide (3).

17. Elément d'accumulateur électrochimique selon une des revendications 1 à 16, caractérisé par le fait qu'un matériau inerte est disposé entre la coque (5) et l'extrémité fermée de l'électrolyte solide (3).

18. Elément d'accumulateur électrochimique selon une des revendications 1 à 17, caractérisé par le fait que l'élément de support (4) est réalisé en aluminium, en un alliage d'aluminium ou en acier.

19. Elément d'accumulateur électrochimique selon une des revendications 1 à 18, caractérisé par le fait que la coque (5) est réalisée en aluminium, en un alliage d'aluminium, en acier spécial, en graphite, en céramique ou en molyb- dène.

# Fig.1

# Fig.2

Fig.3

0 064 676

# Fig.4

# Fig.5